# FASCICULE DE BREVET EUROPEEN

(11) **EP 2 577 114 B1**
(45) Date de publication et mention de la délivrance du brevet: **25.01.2017**
(21) Numéro de dépôt: 11728336.6
(22) Date de dépôt: 31.05.2011
(51) Int. Cl.: F16H 63/20, F16H 59/02

(54) **DISPOSITIF DE TRANSMISSION D'UN MOUVEMENT POUR UN CHANGEMENT DE RAPPORT D'UNE BOITE DE VITESSES D'UN VEHICULE AUTOMOBILE**
VORRICHTUNG ZUR ÜBERTRAGUNG EINER BEWEGUNG FÜR DEN GANGWECHSEL BEI EINEM KRAFTFAHRZEUGGETRIEBE
DEVICE FOR TRANSMITTING A MOVEMENT FOR SHIFTING GEARS IN A MOTOR VEHICLE GEARBOX

(30) Priorité: 02.06.2010 FR 1054286
(43) Date de publication de la demande: 10.04.2013
(73) Titulaire: Dura Automotive Systems SAS, 91570 Bièvres (FR)
(72) Inventeur: BLANC, Hugues, F-42600 Lézigneux (FR); MAITRE, Sébastien, F-43120 Monistrol sur Loire (FR)
(74) Mandataire: Cabinet Laurent & Charras
(86) Numéro de dépôt international: PCT/FR2011/051245
(87) Numéro de publication internationale: WO 2011/151593

(56) Documents cités:
- EP-A2- 1 705 408
- FR-A1- 2 779 794
- FR-A1- 2 805 020
- JP-A- 55 057 925
- JP-A- 57 172 825

## Description

L'invention se rattache au secteur technique des boîtes de vitesse pour véhicules automobiles.

Plus particulièrement, l'invention concerne les moyens de la chaîne cinématique permettant de transmettre les mouvements d'un levier de commande ou autre organe actionneur d'une boîte de vitesse, notamment pour le changement d'un rapport de vitesses.

Notamment, ce moyen de commande, connu sous le terme générique de doigt de passage, coopère avec une encoche que présente une crosse fixée sur un axe pour le déplacement d'une fourchette de commande d'un baladeur pour le passage des rapports de vitesse. Le doigt de passage est assujetti à tout mécanisme de commande approprié, par exemple à une barre de commande accouplée au levier de vitesses ou autre. Ces dispositions ne sont pas décrites en détail car parfaitement connues pour un homme de métier et susceptibles de faire l'objet de différentes variantes d'exécution.

L'invention se situe au niveau du doigt de passage qui constitue une partie du dispositif de transmission en tant que tel d'un mouvement pour assurer les différents changements de rapport.

Selon l'état de la technique, un doigt de passage est réalisé directement par fonderie, en constituant un ensemble monobloc présentant de masse importante. Or, dans le domaine automobile, il est constant de vouloir gagner du poids. Les coûts s'avèrent également importants, étant donné qu'il est nécessaire de faire appel à une fonderie de précision qui malgré tout ne permet pas de supprimer certaines reprises d'usinage.

Le document EP1705408 décrit un dispositif selon le préambule de la revendication 1.

L'invention s'est fixée pour but de remédier à ces inconvénients d'une manière simple, sûre, efficace et rationnelle.

Le problème que se propose de résoudre l'invention est de ne plus réaliser ce type d'organe en fonderie de précision, mais en utilisant, pour partie, une matière plastique injectée, tout en considérant que ces pièces travaillent dans des milieux agressifs en étant soumis à des températures et à des vibrations importantes.

Pour résoudre un tel problème, il a été conçu et mis au point un dispositif de transmission d'un mouvement pour un changement de rapport d'une boîte de vitesses d'un véhicule automobile, qui comprend, surmoulé dans un corps réalisé dans une résine thermoplastique chargée en fibres de verre, un insert conformé pour constituer un doigt de passage apte à coopérer avec une encoche d'une crosse sélectionnée,

le dispositif comprend également :
- un insert conformé pour constituer un axe dont l'une des extrémités est apte à coopérer avec une grille de passage et de sélection des vitesses ;
- un insert conformé pour constituer un profil en came faisant office de piste de billage, en observant qu'un tel profil en came est très difficilement usinable après fonderie, lorsque l'ensemble est réalisé par fonderie ;
- un insert conformé pour constituer une bague pour montage d'une barre de commande, et les inserts ont un module d'élasticité qui est au moins deux fois supérieur à celui de la résine thermoplastique, ladite résine thermoplastique étant apte à lier la ou les fonctions remplies par le ou les inserts.

Avantageusement, en considérant les conditions difficiles dans lesquelles travaille le dispositif, la matière plastique utilisée est une résine thermoplastique PPA notamment une résine PPA-GF50, sans pour cela exclure d'autres matières.

Selon une autre caractéristique, l'autre extrémité de l'axe est équipée d'un capteur pour détecter la position point mort.

La bague pour le montage de la barre de commande est insérée, après surmoulage du corps, dans un alésage en communication avec un trou débouchant pour l'engagement d'un moyen de blocage en translation et en rotation de ladite barre. Le moyen de blocage peut être une goupille.

L'invention est exposée ci-après plus en détail à l'aide des figures des dessins annexés dans lesquels :

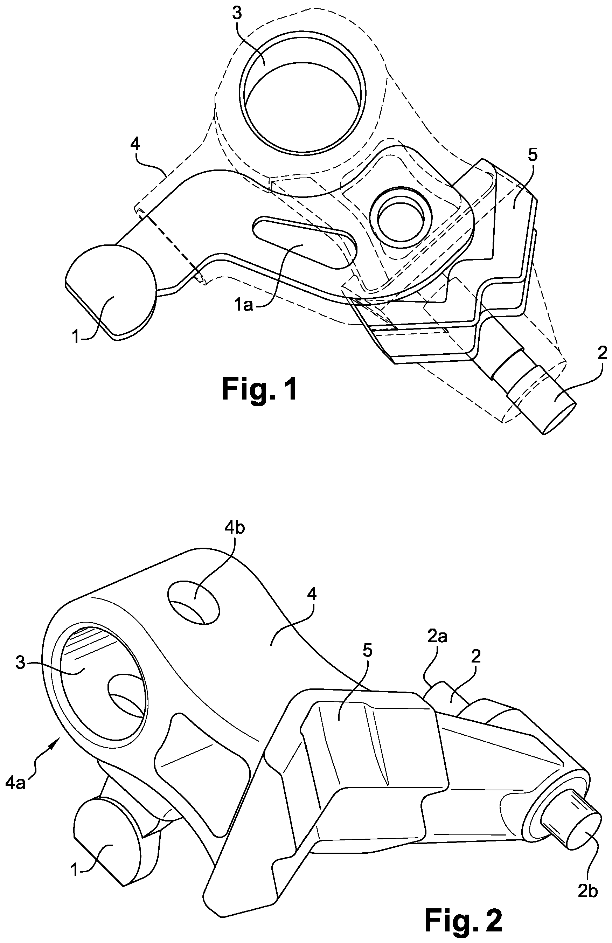

- la figure 1 est une vue en perspective des différents inserts convenablement positionnés dans un moule avant injection de la matière plastique ;
- la figure 2 est une vue en perspective correspondant à la figure 1 après injection de la matière plastique ;
- la figure 3 est une vue partielle en perspective d'un exemple d'une partie de la chaîne cinématique permettant la transmission du mouvement lors d'un changement de rapport de vitesse ;
- la figure 4 est une vue en perspective montrant un exemple de montage du dispositif dans une partie de la chaîne cinématique de la boîte de vitesse.

Selon l'invention, le dispositif de transmission, notamment pour assurer un changement de rapport dans le cadre d'une boîte de vitesses d'un véhicule automobile, comprend au moins un, mais avantageusement plusieurs inserts (1), (2), (3), (5) correspondant chacun à une fonction spécifique, lesdits inserts étant surmoulés dans un corps en résine thermoplastique (4) apte à assurer la liaison des différents fonctions remplies par ces inserts. Les inserts ont un module d'élasticité au moins deux fois supérieur à celui de la résine thermoplastique. Par exemple, les inserts sont métalliques.

L'insert (1) constitue un doigt de passage apte à coopérer, d'une manière connue et comme indiqué, avec une encoche (E) d'une crosse (C) coopérant avec une fourchette (F) pour la commande en translation d'un baladeur (B). L'insert (1) qui constitue le doigt de passage est réalisé, par exemple, à partir d'un fer de section méplate présentant un profil sensiblement en S. Ce fer peut également présenter des évidements (1a) afin de diminuer le poids.

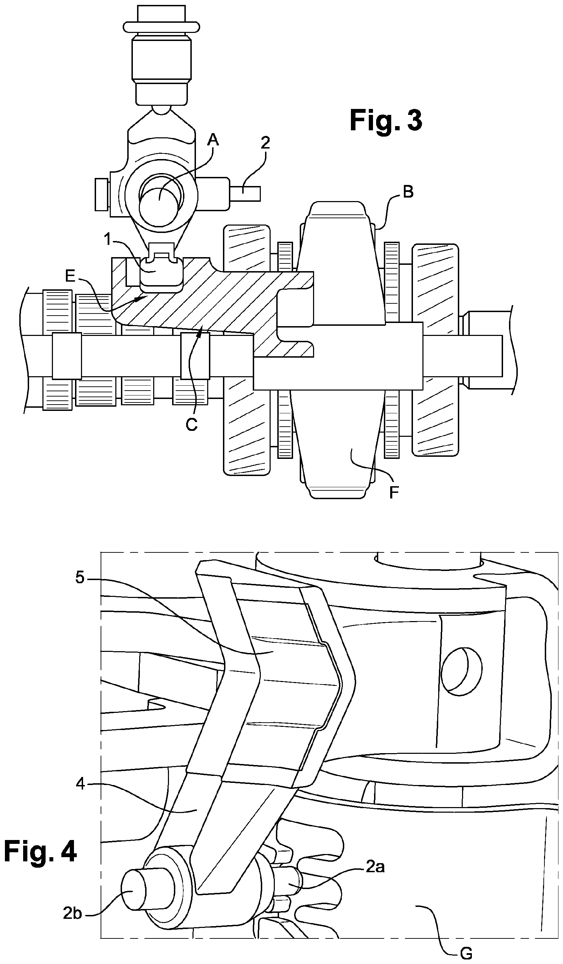

L'insert (2) constitue un axe dont l'une des extrémités (2a) est apte à coopérer avec une grille (G) de passage et de sélection des vitesses (figure 4). L'autre extrémité (2b) de l'axe (2) peut être équipée d'un capteur pour détecter la position « point mort ». Cette disposition s'avère intéressante dans le cas d'un véhicule équipé, de manière connue, d'un système STOP et START, permettant d'assurer l'arrêt et le redémarrage automatique du moteur du véhicule.

L'insert (3) est une bague pour le montage d'une barre de commande (A). Cette bague (3) est insérée après surmoulage du corps (4) dans un alésage (4a) en communication avec un trou débouchant (4b) pour l'engagement d'un moyen de blocage en translation et en rotation de ladite barre. Ce moyen de blocage peut, par exemple, être constitué par une goupille.

L'insert (5) constitue un profil en came apte à permettre une indexation au point mort, en faisant office de piste de billage.

Avantageusement, la matière utilisée pour le corps (4) est la résine thermoplastique chargée, notamment fibres de verre, telles que le PPA GF50, PPA - 6.6, PPA - 6.4.

Les avantages ressortent bien de la description, en particulier on souligne et on rappelle :
▪ le gain de poids (environ 60 % par rapport à une pièce obtenue par fonderie) ;
▪ la quasi-suppression des reprises d'usinage ;
▪ la diminution des coûts en opposition à la technique de fonderie de précision ;
▪ la facilité d'obtenir le profil en came tridimensionnel.

## Revendications

1. Dispositif de transmission d'un mouvement pour un changement de rapport d'une boîte de vitesses d'un véhicule automobile, **caractérisé en ce qu'**il comprend, surmoulé dans un corps (4) réalisé dans une résine thermoplastique chargée en fibres de verre :
- un insert conformé pour constituer un doigt de passage (1) apte à coopérer avec une encoche d'une crosse sélectionnée,
- un insert conformé pour constituer un axe (2) dont l'une des extrémités est apte à coopérer avec une grille de passage et de sélection des vitesses,
- un insert conformé pour constituer un profil en came (5) faisant office de piste de billage,
- un insert (3) conformé pour constituer une bague pour le montage d'une barre de commande,
les inserts ont un module d'élasticité qui est au moins deux fois supérieur à celui de la résine
thermoplastique, ladite résine thermoplastique étant apte à lier la ou les fonctions remplies par les inserts.

2. Dispositif selon la revendication 1, **caractérisé en ce que** l'autre extrémité (2b) de l'axe (2) est équipée d'un capteur pour détecter la position point mort.

3. Dispositif selon la revendication 1, **caractérisé en ce que** la bague (3) pour le montage de la barre de commande est insérée, après surmoulage du corps (4), dans un alésage en communication avec un trou débouchant (2b) pour l'engagement d'un moyen de blocage en translation et en rotation de ladite barre.

4. Dispositif selon la revendication 3, **caractérisé en ce que** le moyen de blocage est une goupille.

5. Dispositif selon l'une quelconque des revendications 1 - 4, **caractérisé en ce que** la matière constitutive du corps (4) est une résine thermoplastique chargée, notamment de fibres de verre.

## Patentansprüche

1. Vorrichtung zur Bewegungsübertragung zum Schalten eines Getriebes eines Kraftfahrzeugs, **dadurch gekennzeichnet, dass** die Vorrichtung, die in ein Gehäuse (4) aus glasfaserverstärktem Thermoplastharz aufgeformt ist, folgende Einsätze umfasst:
- einen Einsatz, der zur Ausbildung eines Schaltfingers (1) ausgestaltet ist, welcher mit einer Nut der gewählten Schaltstange zusammenwirken kann,
- einen Einsatz, der zur Ausbildung eines Zapfens (2) ausgestaltet ist, der an einem Ende mit einem Gangwahl- und Gangwechselhebel zusammenwirken kann,
- einen Einsatz, der zur Ausbildung eines Nockenprofils (5) ausgestaltet ist und als Kugelgesperre fungiert,
- einen Einsatz (3), der zur Ausbildung einer Buchse zum Einbau einer Steuerstange ausgebildet ist,
wobei die Einsätze ein Elastizitätsmodul aufweisen, das mindestens doppelt so groß wie das des thermoplastischen Harzes ist, wobei das thermoplastische Harz in der Lage ist, die von den Einsätzen erfüllte(n) Funktion(en) zu verknüpfen.

2. Vorrichtung nach Anspruch 1, **dadurch gekennzeichnet, dass** das andere Ende (2b) des Zapfens (2) einen Sensor zur Erkennung der Neutralstellung enthält.

3. Vorrichtung nach Anspruch 1, **dadurch gekennzeichnet, dass** die Buchse (3) zum Einbau der Steuerstange, nach Aufformung des Gehäuses (4), in eine Bohrung eingelassen ist, die zum Eingriff einer Vorrichtung zur Blockierung dieser Stange in Translation und in Rotation mit einer durchgehenden Öffnung (2b) in Verbindung steht.

4. Vorrichtung nach Anspruch 3, **dadurch gekennzeichnet, dass** es sich bei der Blockiervorrichtung um einen Splint handelt.

5. Vorrichtung nach einem der Ansprüche 1 bis 4, **dadurch gekennzeichnet, dass** es sich bei dem Material, aus dem das Gehäuse (4) hergestellt ist, um ein thermoplastisches Harz handelt, das insbesondere mit Glasfasern verstärkt ist.

## Claims

1. Device for transmitting a movement for shifting gears in motor vehicle gearbox, **characterized in that** it comprises, overmolded in a body (4) made of a thermoplastic resin filled with glass fibers :
- an insert shaped to constitute a shift finger (1) suitable for co-operating with a notch in a selected crosspiece,
- an insert shaped to constitute a shaft (2), one end of which is suitable for co-operating with a gear selection and shift gate,
- an insert shaped to constitute a cam profile (5) serving as a ball raceway,
- an insert (3) shaped to constitute a ring for receiving a control bar,
the inserts have a modulus of elasticity that is at least twice the modulus of elasticity of the thermoplastic resin, said thermoplastic resin being suitable for associating the functions performed by the inserts.

2. Device according to claim 1, **characterized in that** the other end (2b) of the shaft (2) is equipped with a sensor for detecting the neutral position.

3. Device according to claim 1, **characterized in that**, after the body (4) has been overmolded, the ring (3) for receiving the control bar is inserted into a bore in communication with a through hole (2b) for being engaged by locking means for locking said bar in translation and in rotation.

4. Device according to claim 3, **characterized in that** the locking means are constituted by a pin.

5. Device according to any one of claims 1 to 4, **characterized in that** the material of which the body (4) is made is a thermoplastic resin that is filled, in particular with glass fibers.
